# EUROPÄISCHE PATENTSCHRIFT

(11) **EP 0 533 074 B1**
(45) Veröffentlichungstag und Bekanntmachung des Hinweises auf die Patenterteilung: **24.03.1999**
(21) Anmeldenummer: 92115622.0
(22) Anmeldetag: 12.09.1992
(51) Int. Cl.: G02B 6/12

(54) **Verfahren zur Herstellung eines optischen Wellenleiters mit einem im wesentlichen planaren Substrat**
Method for manufacturing an optical waveguide having an essentially planar substrate
Méthode de fabrication d'un guide d'onde optique à substrat plan

(30) Priorität: 18.09.1991 DE 4130985; 24.04.1992 DE 4213454; 29.08.1992 DE 4228853
(43) Veröffentlichungstag der Anmeldung: 24.03.1993
(60) Teilanmeldung: 94109950.9
(73) Patentinhaber: Schott Glas, 55122 Mainz (DE); CARL-ZEISS-STIFTUNG trading as Schott Glas, 55122 Mainz (DE); F. HOFFMANN-LA ROCHE AG, 4002 Basel (CH)
(72) Erfinder: Heming, Martin, Dr., W-6501 Saulheim (DE); Hochhaus, Roland, W-6500 Mainz 21 (DE); Kersten, Ralf, Prof. Dr., W-6239 Bremthal (DE); Krause, Dieter, Prof. Dr., W-6500 Mainz 21 (DE); Otto, Jürgen, Dr., W-6500 Mainz (DE); Paquet, Volker, W-6500 Mainz 21 (DE); Segner, Johannes, Dr., W-6534 Stromberg (DE); Fattinger, Christof, CH-4249 Blauen (DE)

(56) Entgegenhaltungen:
- EP-A- 146 160
- EP-A- 0 194 639
- US-A- 4 579 750
- US-A- 5 026 135
- 2nd European conference on integrated optics, 17-18 oct. 1983, p. 108-111 K. Tiefenthaler et al.: "Embossing tech nique for fabricating IO components in hard inorganic waveguide materials"
- IEEE Journal of Quantum Electronics, Vol. QE-13, No.5, May 1977 S. 310-317; E.J. Danielewicz et al.: "Far-infrared guided wave optics experiments with anisotropic crystal quartz waveguides"
- Applied Optics, Vol. 23, No. 16; 15.08.84 S.2744-2746 D.K.W. Lam: "Low temperature plasma chemical vapor deposition of silicon oxynitride thin-film waveguides"

## Beschreibung

Die Erfindung betrifft ein Verfahren zur Herstellung eines optischen Wellenleiter, bei welchem auf ein im wesentlichen planares Substrat eine wellenleitende anorganische Schicht aufgebracht wird.

Das Aufbringen von Beschichtungen auf verschiedenartige Substrate ist an sich bekannt, wobei je nach Einsatzzweck und Verwendungsweise der beschichteten Substrate sehr unterschiedliche Anforderungen an die optische Qualität der Beschichtungen gestellt werden müssen.

Aus der DE-OS 38 33 501 ist ein Verfahren zum Aufbringen vielschichtiger optischer Interferenzschichten auf Substrate mit komplexer Oberflächenform bekannt. So werden auf ein Polymersubstrat mehrere hundert Schichten durch plasmaunterstützte, chemische Dampfabscheidung aufgebracht, wobei für die Beschichtung metallorganische Verbindungen eingesetzt werden. Das Beschichtungsverfahren liefert Interferenzschichten aus einem Material mit relativ hohem organischem Anteil, wodurch eine hohe Flexibilität bei der Materialauswahl für die Beschichtung gewährleistet ist. Die Qualität der Beschichtung, insbesondere bezüglich der Mikrostruktur, ist bei dem Verwendungszweck derartiger mit mehreren Interferenzschichten versehener Substrate, wie z. B. bei Helmvisieren für Hubschrauberpiloten, nicht von ausschlaggebender Bedeutung. Es wird zwar erwähnt, daß die Beschichtung nicht die üblicherweise vorhandene Mikrosäulenstruktur aufweist, wobei dies allerdings nur für Beschichtungen von Glassubstraten gezeigt wird. Außerdem ist das Fehlen einer Mikrosäulenstruktur vermutlich auf den relativ hohen organischen Anteil der Beschichtung zurückzuführen. Ein Hinweis auf die Herstellung von optischen Wellenleitern mit im wesentlichen planaren Substraten wird in der DE-OS 38 33 501 nicht gegeben.

Auch die DE-OS 40 08 405.1 gibt keinen Hinweis auf optische Wellenleiter mit im wesentlichen planaren Substraten. Zwar wird die Beschichtung von Kunststoffsubstraten mit Interferenzschichten zur Ausbildung von Reflektoren erwähnt, es wird aber ausdrücklich darauf hingewiesen, daß Kunststoffsubstrate wegen ihrer geringen thermischen Belastbarkeit weniger gut geeignet sind als anorganische Substrate, wie z.B. Glassubstrate.

Im Gegensatz zu Reflektoren oder allgemein mit Interferenzschichten versehenen Substraten sind die Anforderungen an optische Wellenleiter, die z.B. als optische Transducer in Oberflächensensoren, wie z. B. Biosensoren eingesetzt werden, weitaus höher. Insbesondere werden optische Wellenleiter angestrebt, die eine möglichst geringe Dämpfung und eine hohe Brechzahl aufweisen. Solche Wellenleiter sind an sich bekannt, wobei allerdings jeweils Glassubstrate Verwendung finden, die mit anorganischen oder organischen Beschichtungen versehen sind. Die geringe Dämpfung dieser bekannten Wellenleiter wird dadurch ermöglicht, daß das anorganische Substrat wie z. B. Glas auf eine hohe Temperatur aufgeheizt werden kann, so daß die Ausbildung einer Mikrosäulenstruktur weitgehend verhindert wird.

Aus Kunz et al in Eurosensors IV, 1990, Karlsruhe, ist ein optischer planarer Wellenleiter bekannt, der mit reaktivem lon-Plating aus Ta₂O₅ hergestellt ist und eine Brechzahl von 2,2 bei einem Verlust von 1,1 dB/cm für die TE0-Mode und 1,3 dB/cm für die TM0-Mode aufweist.

Es wird der Einfluß des Substratmaterials auf die Verluste bei einer Wellenlänge von 633 nm beschrieben, wobei Schichten auf Quarzglas die geringsten Verluste besitzen. Bei Verwendung dieses Substrates sind bei niedrigem Bogenstrom die Verluste gering ( < 4 dB/cm), die Schicht hat jedoch eine ausgeprägte Säulenstruktur, die sie abhängig gegenüber Umweltbedingungen macht. Um dichte Schichten zu erhalten, muß der Bogenstrom groß gemacht werden, was jedoch mit dem Nachteil verbunden ist, daß die Verluste ansteigen.

Aus Lam, D.K.W., Appl. Opt. 23/1984/2744 ist die Herstellung eines SiOₓN_{y}-Wellenleiters bei einer Substrattemperatur von 220°C auf Quarzglas oder Silizium bekannt. Geringe Verluste von SiOₓN_{y} werden nur für eine Brechzahl von etwa 1,75 erhalten und zwar nach einem zusätzlichen Prozeßschritt, der nur für anorganische Substrate verträglich ist. Hierbei handelt es sich um eine zusätzliche CO₂-Laserbehandlung, bei der der Verlust von 5 dB/cm auf 1,5 dB/cm vermindert wird.

Aus Lukosz, W. et al, Sensors and Actuators, Bl (1990) 585-588 und 592-596 sind Anwendungsmöglichkeiten eines mit Sol-Gel-Technik hergestellten etwa 170 nm dicken Wellenleiters aus einer SiO₂-TiO₂-Mischschicht auf Glas mit einer Brechzahl von 1,74 - 1,80 bekannt. Die Gelschicht ist prägbar, so daß ein Gitter aufgebracht werden kann. Allerdings muß nach dem Prägen die Gelschicht ausgehärtet werden mit dem Nachteil, daß die Gelschicht schrumpft und somit ihre optischen Eigenschaften verändert werden. Reine TiO₂ -Schichten mit hoher Brechzahl können nicht hergestellt werden, weil zum Aushärten so hohe Temperaturen eingesetzt werden müssen, daß die Schichten kristallin werden.

In Heuberger et al, Appl. Opt. 25/1986/1499 werden Wellenleiter beschrieben siehe Oberbegriff von Anspruch 1, die ebenfalls mit der Sol-Gel-Technik hergestellt werden. Die aufgebrachte SiO₂-TiO₂-Mischschicht auf Pyrex-Glas hat einen Verlust von < 1 dB/cm, muß aber ebenfalls bei hohen Temperaturen (500°C) ausgehärtet werden.

In allen Veröffentlichungen, die sich mit optischen Wellenleitern befassen, wird die Herstellung von SiOₓN_{y}-, Ta₂O₅- oder SiO₂-TiO₂-Schichten jeweils auf anorganischen Substraten beschrieben, wobei entweder hohe Substrattemperaturen eingesetzt werden müssen oder eine Zusatzbehandlung vorgenommen werden muß.

Ein weiterer Nachteil der bekannten Wellenleiter ist, daß ihre Substrate selbst nicht prägbar sind, was aber beispielsweise erforderlich ist, um kostengünstig ein optisches Gitter für die Einkopplung bzw. Auskopplung von Licht in die wellenleitende Schicht anzubringen. Darüber hinaus sind die bekannten optischen Wellenleiter zerbrechlich und nicht durch Schneiden oder Stanzen verarbeitbar.

Aus der US-PS 4,749,245 ist ein optischer Wellenleiter auf einem planaren Substrat bekannt, der eine organische wellenleitende Schicht und ein Substrat aus Kunststoff aufweist. Zwischen Substrat und wellenleitender Schicht ist mindestens eine Zwischenschicht aus einem weiteren organischen hochmolekularen Material erforderlich, deren Löslichkeit von der des wellenleitenden organischen Materials verschieden ist und deren Brechzahl niedriger ist. Ein Nachteil dieses Wellenleiters ist, daß für die wellenleitende Schicht nur ein begrenzter Brechzahlbereich zur Verfügung steht (maximal bis 1,7) und daß die wellenleitende Schicht, da Kunststoffe in der Regel Feuchtigkeit aufnehmen, bei sich verändernden Umweltbedingungen (Feuchtigkeit, Temperatur) nicht brechzahlstabil ist. Wellenleiter der beschriebenen Art sind daher für die Oberflächensensorik ungeeignet (s. z.B. R. Reuter et al. APL 52, p 778 (1988)).

Aufgabe der Erfindung ist ein Verfahren bereitzustellen, das die Herstellung eines hochbrechenden optischen planaren Wellenleiters gestattet. Der so hergestellte Wellenleiter soll insbesondere für die wirtschaftliche Herstellung optischer Mikrostrukturen geeignet sein, und eine einfache wirtschaftliche Weiterverarbeitung zu Fertigprodukten erlauben.

Diese Aufgabe wird mit einem Verfaren mit allen Merkmalen des Anspruchs 1 gelöst. Vorteilhafte Ausgestaltungen des Verfahrens sind Gegenstand der Unteransprüche.

Das erfindungsgemäße Verfahren ist dadurch gekennzeichnet, daß als Substrat ein Kunststoffsubstrat oder ein Kunststoffsubstrat mit einem Metalloxidanteil verwendet wird. Unter einem Kunststoffsubstrat mit einem Metalloxidanteil soll im Sinne der vorliegende Erfindung ein Substrat mit einem hohen organischen Anteil, d.h. mit einem Verhältnis der Kohlenwasserstoffgruppen zu den Metallatomen des Oxids von größer 0.1 verstanden werden. Gemäß der Erfindung wird das Kunststoffsubstrat auf eine Temperatur T < T_{g} und das Kunststoffsubstrat mit einem Metalloxidanteil auf eine Temperatur T < 300°C aufgeheizt, wobei Tg die Glastemperatur des Kunststoffes ist, und auf das Substrat mittels eines PCVD-Verfahrens, vorzugsweise PICVD-Verfahrens, eine anorganische wellenleitende Schicht aufgebracht wird. Vorzugsweise wird das Plasma bei diesem Beschichtungsverfahren mittels Mikrowellen angeregt.

Es hat sich herausgestellt, daß bei diesem Verfahren Substrattemperaturen von ca. 60°C bereits ausreichen, um eine Schicht mit mikrosäulenfreier Struktur aufzubringen. Mit diesem Verfahren ist es möglich, eine hohe Packungsdichte von annähernd 1 zu erzielen, wobei die Schicht praktisch so beständig gegen Umwelteinflüsse wie das massive Schichtmaterial ist und praktisch die Brechzahl des massiven Schichtmaterials besitzt. Da nur eine geringe Substrattemperatur zur Ausbildung von verlustarmen anorganischen wellenleitenden Schichten erforderlich ist, konnten mit diesem Verfahren erstmals Kunststoffe oder Materialien mit hohem organischem Anteil als Substrate für optisch wellenleitende Schichten aus anorganischem Material Verwendung finden.

Beispielsweise ist im Parameterfeld der Beschichtung in einem Mikrowellenplasma die Elektronentemperatur, die nur wenige eV beträgt, und das Selfbias Potential zwischen Plasma und Substrat gering. Dies bietet den Vorteil, daß die Substratoberfläche und die anorganische Schicht nicht durch das Plasma strahlengeschädigt werden. Die wellenleitende Schicht wächst bei diesem Verfahren homogen ohne Säulenstruktur und mit hoher Packungsdichte auf.

Je nach Substratmaterial kann es von Vorteil sein, die Haftung des Wellenleiters durch Einsatz eines Verfahrens zur Erhöhung der Haftfestigkeit, das zum Stand der Technik gehört und z.B. in WO 89/01957 beschrieben ist, noch weiter zu verbessern. Auch dann bleibt die wellen leitende Eigenschaft bei geringen Verlusten erhalten.

Der erfindungsgemäß hergestellte optische Wellenleiter mit anorganischer wellenleitender Schicht auf einem Kunststoffsubstrat bietet den Vorteil, daß die hohe Brechzahl der anorganischen Schicht mit den Materialeigenschaften des Kunststoffsubstrates, wie z. B. Bruchfestigkeit und geringes Gewicht sowie wirtschaftlich günstiger Strukturierbarkeit kombiniert sind. Die Schichtdicke, die zur Führung einer bestimmten Zahl von Moden erforderlich ist, wird um so kleiner, je größer die Brechzahl des Wellenleiters ist. Monomodewellenleiter mit hoher Brechzahl der anorganischen wellenleitenden Schicht, die nur die TE0- und TM0-Mode führen, sind insbesondere bei Verwendung des Wellenleiters in der Sensorik (insbesondere Oberflächensensorik) von Bedeutung, da die Empfindlichkeit des Sensors mit der Brechzahl ansteigt.

Zusätzliche Vorteile des erfindungsgemäßen Verfahrens bestehen darin, daß Kunststoffolien als Substrat für den Wellenleiter verwendet werden können. Folien mit Dicken von > 20 µm werden mit dem erfindungsgemäßen Verfahren problemlos mit wellenleitenden Schichten belegt, ohne daß damit eine untere Grenze gegeben wäre. Das Material Kunststoffolie bietet den Vorteil, daß Wellenleiter in großen Stückzahlen kostengünstig hergestellt und als Massenprodukt einer breiten Anwendung zugänglich gemacht werden können. Die Materialeigenschaften der Kunststoffolie vereinfachen die nachfolgende Verarbeitung des Wellenleiters zu Fertigprodukten erheblich.

Vorzugsweise kommen thermoplastisch verarbeitbare Kunststoffe, insbesondere thermoplastisch verarbeitbares Polycarbonat, PMMA, Polyimid oder Polyester als Substratmaterial in Frage.

Thermoplaste haben den Vorteil, daß auf ihrer Oberfläche durch Heißprägen optische Beugungsgitter zum Ein- und Auskoppeln der geführten Welle ohne großen Fertigungsaufwand erzeugt werden können.

Polycarbonate werden bevorzugt, da hier Folien mit guter Oberflächenqualität, d.h. relativ niedriger Oberflächenrauhigkeit verfügbar sind. Darüber hinaus ist das Heißprägen von optischen Gittern in Polycarbonat bereits experimentell erprobt. Auch ist Polycarbonat als Substrat für organische wellenleitende Schichten bekannt. Allerdings haben Polycarbonat-Substrate den Nachteil, daß sie sehr kratzempfindlich sind. Polycarbonate besitzen eine gute Temperaturstabilität, die maximale Dauergebrauchstemperatur liegt bei etwa 135°C.

PMMA ist sehr kratzfest, weist ein nur geringes Wasseraufnahmevermögen auf, ist aber nicht so temperaturstabil wie Polycarbonat. Die maximale Dauergebrauchstemperatur von PMMA liegt bei nur 60-90°C, wodurch die Beschichtungstemperatur für den Wellenleiter stark eingeschränkt wird. Im allgemeinen werden mit höheren Substrattemperaturen bei der Herstellung der anorganischen wellenleitenden Schicht höhere Brechzahlen erreicht. Dagegen ist PMMA wie Polycarbonat gut prägbar und darüber hinaus auch photostrukturierbar.

Polyimidsubstrate haben den Vorteil, daß aufgrund der vergleichsweise geringen thermischen Ausdehnung dieses Kunststoffs Spannungen zwischen Substrat und anorganischer Beschichtung kleiner sind als bei anderen Kunststoffen. Darüber hinaus können auch Polyimid-Substrate mittels Heißprägung oder Photostrukturierung mit optischen Beugungsgittern versehen werden. Die Dauergebrauchstemperatur von Polyimid liegt mit über 200°C noch deutlich höher als die des Polycarbonat. Bei Polyimidsubstraten sind daher hohe Beschichtungstemperaturen und damit Wellenleiter mit hohen Brechzahlen möglich.

Anorganische Schichten haften sehr gut auf Polyestersubstraten. Polyestersubstrate sind darüber hinaus ebenfalls sehr temperaturstabil (Dauergebrauchstemperaturen von 100 bis 120°C, kurzzeitig sogar bis 200°C) und gut prägbar.

Weitere geeignete Kunststoffe sind u.a. PVC (Dauergebrauchstemperatur 65-85°C und Polystyrol (Dauergebrauchstemperatur 50-70°C) für die ebenfalls die Heißprägetechnik bekannt ist, sowie CR 39, Polyurethan oder ein Polymerisat aus Diethylenglykol-bis-allylcarbonat.

Bevorzugt werden Kunststoffolien als Substratmaterial verwendet. Kunststoffolien eingesetzt als Endlosband können in einem kontinuierlichen Rollprägeverfahren mit optischen Gittern versehen werden. Eine alternative Methode für die Gitterherstellung auf der Substratoberfläche ist das Prägen von Kunststoffplatten mit einem planaren Stempel. Aus der mit dem Wellenleiter beschichteten Kunststoffolie oder -platte sind einzelne Sensor-chips leicht ausstanzbar ( z.B. für die Verwendung als optische Transducer in der Sensorik).

Anstelle eines reinen Kunststoffsubstrats können auch Kunststoffsubstrate mit einem Metalloxidanteil eingesetzt werden. Hierzu eignen sich die sogenannten ORMOCER-Materialien. ORganically MOdified CERamics - z.B. Greuer, K. und Schother, G. ORMOCERe: "Eine neue Werkstoffklasse, Erste Produktentwicklung", FhG-Berichte 2 (1990). Sowohl diese ORMOCER-Materialien als auch aus der Flüssigkeitsphase hergestellte Kunststoffschichten, z.B. aus nicht-thermoplastischen Polyimiden, sind im nicht ausgehärteten Zustand prägbar, so daß ein Einkoppelgitter bzw. Auskoppelgitter ohne großen Fertigungsaufwand ausgebildet werden kann.

Vorzugsweise werden diese ORMOCER- oder auch die aus der Flüssigkeitsphase hergestellten Kunststoffschichten auf eine weitere Trägerplatte oder -folie aus anorganischem oder organischem Material, aufgebracht. Dies hat den Vorteil, daß einerseits aufgrund der Oberflächenspannung der Beschichtungslösung eine optisch hochwertige Oberfläche mit niedriger Rauhigkeit einfach herstellbar ist, andererseits bei der Verwendung anorganischer Trägermaterialien der laterale thermische Ausdehnungskoeffizient der mit ORMOCER oder Kunststoff beschichteten Trägerplatte oder -folie optimal an den thermischen Ausdehnungskoeffizienten der wellenleitenden Schicht angepaßt werden kann (siehe hierzu z. B. G. Elsner et al., Thin Solid Films, 185 (1990), 189-197; T. Oguchi et al., Electronics Letters, 27 (1991), 706-707).

Kunststoffe besitzen einen wesentlich größeren thermischen Ausdehnungskoeffizienten als anorganische Materialien, wie z. B. Glas, SiO₂, TiO₂, u. a.. Werden organische Substrate mit einer anorganischen Schicht belegt, so kann der unterschiedliche thermische Ausdehnungseffizient bei Temperaturänderung zur Rißbildung in der wellenleitenden Schicht führen. Werden dünne organische Substratschichten (einige µm) aber z. B. auf einer Glasträgerplatte aufgebracht, so entwickelt sich ein anisotroper thermischer Ausdehnungskoeffizient. In der Ebene nimmt der Kunststoff einen dem Trägermaterial ähnlichen Wert an, während senkrecht dazu ein dem Kunststoffmaterial ähnlicher Ausdehnungskoeffizient beobachtet wird. Das Gesamtsystem hat somit in lateraler Richtung einen dem Trägermaterial ähnlichen Ausdehnungskoeffizienten, der in der Regel wesentlich besser an den der wellenleitenden Schicht angepaßt ist. Die Rißbildungsneigung wird damit vermindert.

Aber auch bei Verwendung thermoplastischer oder photostrukturierbarer Substrate kann es vorteilhaft sein, diese ebenfalls auf eine weitere Trägerplatte oder -folie der obengenannten Art aufzubringen, z.B. durch Aufziehen oder Aufschleudern einer Beschichtungslösung. Geeignete Beschichtungslösungen sind thermoplastische Polyimide in Lösung oder Photoresist auf der Basis von Polyimide. Diese Maßnahme bietet die obengenannten Vorteile der vereinfachten Herstellung optisch hochwertiger Oberflächen mit niedriger Rauhigkeit und der angepaßten thermischen Ausdehnung von Trägerplatte resp. -folie und wellenleitender Schicht. Die Herstellung des optischen Beugungsgitters bzw. der optischen Mikrostruktur (zur Herstellung eines Streifenwellenleiters) in der Substratschicht auf der Trägerplatte oder -folie kann durch Prägung oder Photostrukturierung erfolgen.

Platten aus anorganischem Material bestehen bevorzugt aus Glas, wie z.B. Kalknatronglas, oder Quarzglas. Es können aber auch Metallplatten zum Einsatz kommen.

Die Schichtdicke des Substrats sollte zwischen 20 µm und 2 mm, vorzugsweise weniger als 500 µm betragen. Damit sind die Substrate einfach handhabbar und auch zur Herstellung von Sensor-Chips einfach stanzbar. Wird das Substrat auf eine Trägerfolie oder -platte aufgebracht, so sollte die Schichtdicke zwischen 0.1 und 50 µm, vorzugsweise zwischen 0,5 und 20 µm betragen.

Solche Schichten weisen eine für die Prägung eines optischen Gitters ausreichende Dicke auf, andererseits wird die aus beschichtungstechnischen Gründen gegebene Obergrenze für die Schichtdicke noch nicht erreicht.

Der erfindungsgemäß hergestellte Wellenleiter weist ein im wesentlichen planares Substrat auf. "Im wesentlichen planar" im Sinne dieser Erfindung bedeutet, daß das Substrat durchaus geringfügig uneben, d. h. z. B. leicht gewölbt, sein kann.

Vorzugsweise werden mit Hilfe des erfindungsgemäßen Verfahrens anorganische wellenleitende Schicht aus TiO₂, aus einer TiO₂-SiO₂-Mischung, aus ZnO, Nb₂O₅, Si₃N₄, Ta₂O₅, HfO₂ oder ZrO₂ auf die Substrate aufgebracht. Die Verwendung dieser Materialien zur Herstellung hochbrechender wellenleitender Schichten ist bekannt. Besonders bevorzugt sind Wellenleiterschichten aus SiO₂, TiO₂ oder Si₃N₄, da die Herstellung solcher Schichten mittels eines PCVD- oder PICVD-Verfahrens an sich bekannt und erprobt ist und die Ausgangsstoffe für diese Materialien sehr preiswert sind.

Die Dämpfung eines erfindungsgemäß hergestellten optischen Wellenleiters liegt typischerweise unterhalb von 10 dB/cm. Vorzugsweise ist die Dämpfung < 5 dB/cm, insbesondere kleiner 3 dB/cm. Diese Werte ergeben sich aus der Forderung, daß die Propagationsstrecke der geführten Welle im Wellenleiter für Anwendungen des Wellenleiters als optischer Transducer in der Oberflächensensorik relativ kurz bemessen ist, sie ist typischerweise kleiner als 1 cm.

Für das Ein- und Auskoppeln von kohärentem Licht in bzw. aus dem Schichtwellenleiter ist es bekannt, eines oder mehrere sog. optische Beugungsgitter zu verwenden. Das optische Beugungsgitter kann sich sowohl über begrenzte Regionen des Trägersubstrats als auch vollflächig über die gesamte Substratoberfläche erstrecken. Die vollflächige Ausbildung des Beugungsgitters hat den Vorteil, daß eine aufwendige Justage bei der Aus- bzw. Einkopplung des Lichts entfällt.

Gitterstrukturen für diese Anwendung liegen vorzugsweise im Bereich von 1000 bis 5000 1/mm mit Strukturtiefen von 1 bis etwa 50 nm, stärker bevorzugt 2 bis 20 nm.

Das optische Beugungsgitter kann sowohl als Mikro-Reliefgitter als auch als Brechzahlgitter, d.h. als kontinuierliche Schicht mit einer sich periodisch ändernden Brechzahl, ausgebildet sein.

Insbesondere bei Verwendung eines erfindungsgemäß hergestellten Wellenleiters als optischer Transducer für einen Oberflächensensor, insbesondere Biosensor, ist es vorteilhaft, das optische Beugungsgitter als multidiffraktives, insbesondere bidiffraktives Gitter auszubilden. Bidiffraktive Gitter als Ein- und Auskoppler für optische Wellenleiter sind bekannt und in der EP-A 455 067 beschrieben. Als "bidiffraktiv" wird eine Gitterstruktur bezeichnet, deren Frequenzspektrum zwei (multidiffraktives Gitter: mehrere) Fundamentalkomponenten aufweist. Ein bidiffraktives Gitter bewirkt eine Richtungsseparation zwischen ausgekoppeltem Licht und reflektierten, transmittierten, respektive direkt abgebeugten Teilstrahlen. Dies ermöglicht es, in der wellenleitenden Schicht geführtes Licht nach der Auskopplung hintergrundfrei zu detektieren, obwohl die Regionen auf der wellenleitenden Schicht, in denen das Ein- und Auskoppeln der geführten Lichtwelle erfolgt, teilweise überlappen.

Die bidiffraktive Gitterstruktur wird durch Überlagerung von zwei Gittern mit unterschiedlicher Periodizität und/oder Orientierung realisiert. Einzelheiten über die Herstellung und weitere Vorteile des "bidiffraktiven Gitterkopplers" sind in der EP-A 455 067 beschrieben.

In einer weiteren bevorzugten Ausführungsform der Erfindung ist vorgesehen, zwischen dem Substrat und der wellenleitenden Schicht wenigstens eine Zwischenschicht anzuordnen.

Die Zwischenschicht dient u.a. der Verbesserung der Substratoberfläche bzgl. ihrer Rauhigkeit. Kommerziell erhältliche thermoplastische Kunststoffplatten oder -folien besitzen aufgrund ihres Herstellprozesses eine für die Anwendung zu hohe Oberflächenrauhigkeit (typischerweise 3-10 nm, RMS-Wert). Diese bewirkt starke Streuverluste der geführten Moden. Die Oberflächenrauhigkeit des Substrates geht in die Dämpfung quadratisch ein. Rauhigkeiten <3 nm, bevorzugt < 1,5 nm sind aber notwendig, um rauhigkeitsinduzierte Streuverluste in hochbrechenden, monomodigen Wellenleitern, wie sie z.B. für die Anwendung als optische Transducer in Oberflächensensoren, insbesondere Biosensoren, bevorzugt werden, zu minimieren. Die Zwischenschicht weist bevorzugt eine Oberflächenrauhigkeit < 3 nm, stärker bevorzugt < 1,5 nm auf.

Vorteilhafterweise bildet die Zwischenschicht, bei in die Substratoberfläche eingeprägtem optischen Beugungsgitter die Gitterstruktur nicht im Verhältnis 1:1 auf ihrer Oberfläche ab, sondern verkleinert deren Modulationstiefe, wodurch eine definierte Abschwächung des Beugungswirkungsgrades und der Ein- und Auskoppeleffizienz der Gitterstruktur erzielt wird. Dies hat insbesondere bei der Heißprägung des optischen Gitters herstellungstechnische Vorteile.

Beim Heißprägen einer Kunststoffplatte oder Folie wird üblicherweise von einem Master durch Elektroplattieren ein Metallstempel hergestellt. Die Kunststoffplatte oder -folie wird auf eine Temperatur von mindestens der Glastemperatur des Kunststoffes erhitzt und mit moderatem Druck gegen den Metallstempel gedrückt. Das Verfahren kann auch vollkontinuierlich in einer Rollprägung durchgeführt werden, wobei durch Elektroplattieren ein Metall-shim gefertigt wird, der auf eine heizbare Walze aufgespannt wird.

Die Folie wird dann auf eine Temperatur oberhalb ihres Tg erhitzt und unter Druck durch zwei Walzen gezogen, wobei eine mit dem strukturierten Metall-shim bespannt ist. Rollprägungen auf Breiten von 300 mm und mehr gehören zum Stand der Technik. Die für die üblichen Anwendungen, wie z.B. die Herstellung von holographischen Sicherheitselementen oder die Herstellung von sog. Prismenfolien für Geschenkverpackungen, verwendeten Strukturtiefen liegen im Bereich von etwa 100 nm und darüber. Für die Ein- bzw. Auskopplung von Licht werden aber Gitter mit deutlich geringeren Strukturtiefen (< 50 nm) benötigt, wodurch höhere Anforderungen an die Herstellung eines Masters gestellt werden müssen. Die Strukturtiefentoleranz sollte hier maximal ± 20 %, vorzugsweise nur ± 5 % betragen. Das Auftragen einer Zwischenschicht, welche die Gittertiefe um ein gewünschtes Maß vermindert, hat nun den Vorteil, daß auch zur Herstellung feiner optischer Beugungsgitter Metallshims mit üblichen Strukturfiefen (um die 100 nm) und damit größerer Strukturtiefentoleranz Verwendung finden können.

Die Furchen des Gitters werden im Anschluß an den Prägeprozeß mittels der Zwischenschicht in einfacher Weise so weit aufgefüllt, bis eine gewünschte Beugungs- bzw. Ein- und Auskoppeleffizienz des Gitters erreicht wird. Bei Verwendung von Metallshims mit Strukturtiefen um die 100 nm wird es hierzu in der Regel ausreichen, daß die Dicke der Zwischenschicht wenigstens das 0,1-fache und höchstens das 50-fache der Tiefe der geprägten Gitterstruktur beträgt.

Es ist des weiteren bekannt, daß die Qualität von Prägeshims im Laufe der Zeit insbesondere durch Abrieb vermindert wird. Dies führt zu einer größeren Rauhigkeit der geprägten Substratoberfläche und damit zu einer Zunahme der Dämpfung in der wellenleitenden Schicht. Das Aufbringen einer Zwischenschicht hat hier den weiteren Vorteil, daß nicht nur die Oberflächenrauhigkeiten, die durch abgenutzte Prägeshims entstehen, wieder geglättet werden können, über die Dicke der Zwischenschicht kann auch die Strukturtiefe des geprägten Gitters und damit die Beugungs- und Ein- und Auskoppeleffizienz des Gitters in einfacher Weise nach reguliert werden. Diese verminderten Anforderungen an die Qualität der Prägeshims machen sich in geringeren Herstellungskosten eines nach der Erfindung hergestellten Wellenleiters bemerkbar.

Mit zunehmender Dicke der Zwischenschicht wird die Substratoberfläche immer weiter aus dem Bereich des quergedämpften Feldes der Welle herausgeführt. Dadurch, daß die geführte Welle bei ausreichender Dicke der Zwischenschicht nur noch in ihrem Randbereich mit der Substratoberfläche in Wechselwirkung tritt, werden Streu- und Absorptionsverluste minimiert.

Die Zwischenschicht kann als einzelne Schicht ausgebildet sein, sich aber auch aus einem Schichtenpaket zusammensetzen, wobei dann die Bezeichnung "Dicke der Zwischenschicht" im Sinne dieser Erfindung als Dicke des gesamten Schichtenpakets zu verstehen ist. Wegen der einfacheren Herstellung und um die Kosten gering zu halten, wird die Ausbildung der Zwischenschicht als Einzelschicht bevorzugt.

Als Zwischenschicht ist eine solche geeignet, die niedrigbrechend und absorptionsarm ist sowie eine glasige, d.h. nichtkristalline Struktur aufweist. Es kann sich sowohl um eine Schicht aus einem organischen Material als auch um eine Schicht aus einem anorganischen Material handeln. Auch können Kompositmaterialien aus anorganischen und organischen Komponenten eingesetzt werden. Schichtpakete können aus anorganischen und/oder organischen Einzelschichten zusammengesetzt sein. Vorzugsweise wird für die Zwischenschicht ein Material verwendet, das sie als Unterlage für die mittels PCVD, aufgebrachte wellenleitende Schicht brauchbar macht.

Als Materialien für die Zwischenschicht können beispielsweise verwendet werden: SiO₂, F- oder B-dotiertes SiO₂, Gradientenschichten aus SiOₓC_{y}H_{z}, bei denen der Kohlenwasserstoffanteil kontinuierlich von der Substratoberfläche her abnimmt, Al₂O₃, organisch modifizierte Keramikschichten (ORMOCERE), und UV-härtbare Lacke. In einer bevorzugten Ausführungsform besteht die Zwischenschicht aus einem organischen Material, da sich organische Materialien bei niedrigeren Temperaturen als anorganische verfestigen.

In einer weiteren bevorzugten Ausführungsform besteht die Zwischenschicht aus SiO₂. Dies hat den Vorteil, daß Zwischenschicht und wellenleitende Schicht gemeinsam in einem Vakuumprozeß aufgebracht werden können.

Vorteilhafterweise ist die Brechzahl des Materials für die Zwischenschicht kleiner oder gleich der des Substratmaterials, da die Sensitivität des Wellenleiters durch den Brechzahlunterschied zwischen wellenleitender Schicht und Unterlage bestimmt wird. Voraussetzung hierfür ist aber, daß die Unterlage optisch wirksam ist, d. h. eine Mindestdicke von etwa 50 µm aufweist. Bei Verwendung von TiO₂ für die wellenleitende Schicht sollte die Zwischenschicht aus einem Material mit einer Brechzahl zwischen 1,3 und 1,6 bestehen.

Es ist vorteilhaft, zwischen zwei chemisch inkompatiblen Schichten, beispielsweise dem organischen Substrat oder der organischen Zwischenschicht und der anorganischen wellenleitenden Schicht eine Haftvermittlungsschicht anzuordnen. Diese kann insbesondere aus einem Material bestehen, dessen thermischer Ausdehnungskoeffizient zwischen denen der zu verbindenden Materialien liegt, wodurch eine Angleichung der Schichten im thermischen Ausdehnungsverhalten und schon allein damit eine bessere Haftung der Schichten erreicht wird. Vorzugsweise werden als Haftvermittlungsschichten Gradientenschichten aus SiOₓC_{y}H_{z} eingesetzt, wobei auch hier, wie im Falle der Zwischenschicht, der Kohlenwasserstoffanteil kontinuierlich von der Grenzfläche zur organischen Schicht zur Grenzfläche zur anorganischen Schicht hin abnehmen sollte.

Darüber hinaus hat es sich insbesondere bei Anwendung eines PCVD-Verfahrens als vorteilhaft erwiesen, auf das organische Substrat bzw. allgemein auf eine Schicht aus organischem Material eine Schutzschicht aufzubringen, um die organische Schicht beim nachfolgenden Aufbringen der wellenleitenden Schicht vor nachteiligen Einflüssen zu schützen. Je nach organischem Material der Unterlagenschicht kann es von Vorteil sein, die Schutzschicht aus einem Material zu wählen, das gegen Angriff energetischer Partikel, wie zum Beispiel Ionen, Radikale, aus dem Plasma der Ausgangsstoffe für die wellenleitende Schicht, z.B. Cl-Atome, schützt. Für die Schutzschicht kommen SiO₂ oder SiOₓC_{y}H_{z}-Verbindungen in Frage. Bevorzugt besteht die Schutzschicht aus SiO₂. Eine Schichtdicke von wenigen nm, vorzugsweise zwischen 1 nm und 200 nm reicht aus. Diese Schutzschicht ist hochfest, absorptionsarm und so ausgelegt, daß sie bei der Wellenlänge des Lichtes, für die der Wellenleiter ausgelegt ist, nicht lichtstreuend ist. Bei Verwendung einer SiOₓC_{y}H_{z}-Verbindung dient die Schutzschicht zugleich als haftungsvermittelnde Schicht.

Vorzugsweise besteht die Zwischenschicht aus einem Material, das sie sowohl als Schutzschicht als auch als Haftvermittlungsschicht brauchbar macht.

Für verschiedene Anwendungen des Wellenleiters in der Sensorik und Analytik erweist es sich als vorteilhaft, die Oberfläche des erfindungsgemäß hergestellten Wellenleiters in definierten Bereichen oder vollflächig mit einer Deckschicht aus anorganischem oder organischem Material zu versehen. Die Deckschicht kann z. B. dazu dienen, eine Sensoroberfläche mit bestimmten chemischen oder physikalischen Eigenschaften bereitzustellen.

Oberflächen der Materialien SiO₂ und Polystyrol spielen in der Analytik eine wichtige Rolle. Deckschichten aus SiO₂ und Polystyrol sind für den Einsatz des erfindungsgemäßen Wellenleiters in der Oberflächensensorik geeignet.

Für diverse Anwendungen von Oberflächen in der Analytik (insbesondere der Affinitäts-Chromatographie) hat die Verwendung von porösen Materialien mit großer innerer Oberfläche, z. B. poröses SiO₂, entscheidende Bedeutung. Der erfindungsgemäße Wellenleiter, mit einer Deckschicht aus porösem SiO₂ versehen, besitzt ideale Materialeigenschaften für den Einsatz als optischer Sensor im Bereich der Analytik (insbesondere der Affinitäts-Chromatographie).

Die optisch-wellen leitende Schichtstruktur auf der Substratoberfläche läßt sich als planarer optischer Wellenleiter oder als sogenannter Streifenwellenleiter ausbilden. Streifenwellenleiter werden auch als Kanalwellenleiter oder Stegwellenleiter bezeichnet. Verschiedene Anwendungen von planaren Wellenleitern und Streifenwellenleitern in der optischen Sensorik sind in Kunz, Proc. SPIE vol. 1587 (1992) beschrieben.

Bei einem planaren optischen Wellenleiter ist die Ausbreitungsrichtung der geführten Lichtwelle entlang der Substratoberfläche frei wählbar. Die Ausbreitungsrichtung der geführten Lichtwelle läßt sich z. B. kontrollieren, durch geeignete Wahl von Gitterkonstante und Orientierung des Koppelgitters sowie durch geeignete Wahl der Richtung des einfallenden Lichtstrahls.

Im Falle des Steifenwellenleiters erfolgt die Wellenleitung entlang vordefinierter Spuren auf der Substratoberfläche. Die Ausbreitungsrichtung der geführten Lichtwelle in der Ebene der Substratoberfläche ist durch die streifenförmige Struktur des Wellenleiters definiert. Das Einkoppeln von Licht in einen Streifenwellenleiter erfolgt z. B. mit einem Koppelgitter. Dabei sind Gitterkonstante und Orientierung des Koppelgitters und die Richtung des einfallenden Lichtstrahls so zu wählen, daß die eingekoppelte Lichtwelle die vordefinierte Ausbreitungsrichtung der geführten Lichtwelle im Streifenwellenleiter aufweist.

Für die Herstellung von Streifenwellenleitern ist das optisch-wellenleitende Schichtpaket mit einer streifenförmigen, optischen Mikrostruktur zu versehen. Die Mikrostruktur kann sich auf der Substratoberfläche und/oder in einer Zwischenschicht zwischen Substrat und wellen leitender Schicht und/oder in der wellenleitenden Schicht und/oder in einer Deckschicht auf der wellenleitenden Schicht befinden. Die Mikrostrukturierung kann ein geeignetes Reliefprofil und/oder eine Brechzahlmodulation parallel zur Substratoberfläche umfassen.

In einer bevorzugten Ausführungsform der Erfindung ist die Herstellung der streifenförmigen Mikrostrukturen mit analogen Techniken vorgesehen, wie sie für die Herstellung von optischen Gitterstrukturen für das Ein- oder Auskoppeln beschrieben werden.

In einer anderen Ausführungsform der Erfindung erfolgt die Herstellung des Streifenwellenleiters durch Strukturierung einer Deckschicht auf der wellenleitenden Schicht. Herstellung und Wirkungsweise strukturierter Deckschichten für die Definition von Streifenwellenleitern sind in der Literatur beschrieben, siehe z. B. S. Valette et al., Si-based integrated optics technologies, Solid State Technology, Feb. 1989.

Sowohl planare optische Wellenleiter als auch Streifenwellenleiter finden als Transducer in der optischen Sensorik Verwendung (siehe Kunz et al., Proc. SPIE vol. 1587 (1992)). Eine weitere wichtige Anwendung von planaren optischen Wellen leitern und Streifenwellenleitern im Bereich der Sensorik und Signalverarbeitung, ist deren Verwendung als passive Bestandteile in integriert-optischen Baugruppen insbesondere integriert-optischen Netzwerken. Die erfindungsgemäß hergestellten Wellenleiter sind für die obigen Anwendungen besonders geeignet.

Das oben beschriebene optische Beugungsgitter wird vorzugsweise mittels eines Abformverfahrens, z.B. Heißprägen, direkt in die Oberfläche des organischen Substrats eingeprägt. Insbesondere ist eine kostengünstige Herstellung eines erfindungsgemäßen Wellenleiters dann zu erwarten, wenn eine Kunststoffolie als Substrat verwendet wird und die Strukturierung der Substratoberfläche in einem Foliendurchlauf geschehen kann. Hier hat sich insbesondere die Rollprägung von Kunststoffolien bewährt, da sie zusätzlich noch zu einer Glättung der Substratoberfläche führt.

Kunststoffolien besitzen aufgrund ihres Herstellungsprozesses häufig Riefen und weisen eine zu große Oberflächenrauhigkeit von meist mehr als 3 nm RMS auf. Vermutlich ist dies einer der Gründe, warum der Einsatz von Kunststoffolien als Substrat für wellen leitende Schichten nicht bekannt ist. Zwar ist es für einen Folienhersteller prinzipiell möglich, unter Verwendung besonders glatter Walzen ebenfalls Folien mit der geforderten Rauhigkeit herzustellen. Da der Bedarf an solch extrem glatten Folien jedoch gering ist und eine Sonderfertigung dieser Folien sehr kostspielig ist, empfiehlt sich eine andere Vorgehensweise.

Es hat sich gezeigt, daß die Anwendung des an sich bekannten Rollprägeverfahrens zur Herstellung von Gittern auf Kunststoffolien sich vorteilhaft auf die Herstellung qualitativ hochwertiger Substratoberflächen auswirkt. Es wurde überraschenderweise gefunden, daß für einen erfindungsgemäßen hergestellten Wellenleiter nicht nur die zum Ein- und Auskoppeln benötigten Gitter durch Rollprägung erhalten werden können, sondern auch eine glattere Oberfläche mit einer Rauhigkeit von < 1,5 nm (RMS) in einem für die Wellenleitung bestimmten Zwischenbereich, wenn entsprechend hochwertige Metallshims eingesetzt wurden.

Ein weiteres Verfahren zur Herstellung einer optischen Beugungsgitters ist die Photostrukturierung. Hierfür wird als Substrat ein photostrukturierbares Polymer, z.B. ein Photoresist auf der Basis von Polyimide, verwendet oder ein Kunststoff, dessen Brechzahl photochemisch veränderbar ist. Solche Kunststoffe sind beispielsweise in Driemele et al., Appl. Opt. 25, 2960 ff., Hornak et al., J. Appl. Phys., 67 (1990), und Beeson et al., Appl. Phys. Lett. 58 (1991), 1955 ff beschrieben.

Die Herstellung des optischen Beugungsgitters erfolgt dabei durch Belichten definierter Bereiche auf der Substratoberfläche, wodurch eine lokale, photochemische Veränderung des Substratmaterials induziert wird. Bei Verwendung von Photoresist folgt dem Belichten ein Entwicklungsschritt, welcher ein Mikro-Reliefgitter in der Substratoberfläche erzeugt. Bei Verwendung von Kunststoff mit photochemisch veränderbarer Brechzahl erzeugt die lokale Belichtung eine Brechzahlmodulation in einer Ebene parallel zur Substratoberfläche.

Ein weiteres Verfahren zur Herstellung eines optischen Beugungsgitters ist das Prägen eines Polymerfilms, welcher durch Belichten (insbesondere durch Belichten im UV) vernetzt und dabei aushärtet.

Es kann aber auch vorteilhaft sein, das optische Beugungsgitter nicht direkt auf der Substratoberfläche anzubringen, sondern hierfür eine eigene "Gitterschicht" vorzusehen. Diese Vorgehensweise bietet sich beispielsweise dann an, wenn das Beugungsgitter nicht als Reliefgitter auf der Substratoberfläche, sondern als Schicht mit sich periodisch ändernder Brechzahl ausgebildet werden soll. Das Beugungsgitter kann in einer solchen Schicht, die aus einem photorefraktiven Material bestehen kann, beispielsweise aus einem Polymer, dessen Brechzahl durch Belichtung geändert werden kann, in einfacher Weise, wie bereits oben beschrieben, mittels eines photolithographischen Prozesses erzeugt werden.

Ein weiteres Verfahren zur Herstellung eines optischen Beugungsgitters ist das Injection Molding, das z. B. in A. Neyer at al., Proceedings of Integrated Photonics Research, 1992, beschrieben ist.

Bei den aus der flüssigen Phase hergestellten Kunststoffschichten wie auch bei den ORMOCER-Schichten werden die optischen Beugungsgitter bzw. die optischen Mikrostrukturen (Streifenwellenleiter) vorzugsweise durch plastische Formung erzeugt. Dabei wird der aus der Flüssigkeitsphase aufgebrachte Film vorerst getrocknet. In diesem Zustand ist er noch durch Aufdrucken eines Stempels verformbar. Im verformten Zustand muß der Film dann gehärtet werden, z. B. durch UV- oder Wärmeeinwirkung. Die UV-Einwirkung kann bei Verwendung eines transparenten Stempels durch diesen hindurch erfolgen.

Die Zwischenschicht aus organischem Material wird bevorzugt in einem Tauch- oder Schleuderverfahren aufgebracht. Es hat sich gezeigt, daß bei Ausbildung der Zwischenschicht aus der flüssigen Phase die Oberflächenspannung der Flüssigkeit zu einer stärkeren Einebnung von Rauhigkeiten auf der Substratoberfläche sowie der Gitterstruktur führt. Allgemein eignen sich zur Herstellung der Zwischenschicht alle Verfahren, die kompakte, säulenstrukturfreie Schichten liefern, beispielsweise plasmagestütze CVD-Prozesse, insbesondere Mikrowellen-Plasma-lmpuls-CVD, oder lonensputtern u.a.. Für eine Zwischenschicht aus SiO₂ ist das PCVD-Verfahren bevorzugt, da dann Zwischenschicht und wellenleitende Schicht in einem Vakuumprozeß aufgebracht werden können.

Die Schutzschicht und die Haftvermittlungsschicht werden vorzugsweise mit einem PCVD-, insbesondere einem PICVD-Verfahren, hergestellt.

Das erfindungsgemäße Verfahren kann sowohl in einem Foliendurchlaufverfahren als auch "batch-weise" in einer PCVD-Anlage mit Gaswechselsystem, in welcher auf das mit einer Gitterstruktur versehene Substrat nacheinander Zwischenschicht, Haftvermittlungs- und Schutzschicht und wellenleitende Schicht aufgetragen werden, durchgeführt werden. In einer vorteilhaften Verfahrensführung wird über die Schichtdicke der Zwischenschicht die Einstellung der Gittertiefe bewirkt. Dies kann durch Messung der Beugungseffizienz und/oder Ein- oder Auskoppeleffizienz der Gitterstruktur geschehen. Die Messung der Beugungseffizienz erfolgt hierbei vor der Beschichtung an dem mit der Gitterstruktur versehenen Substrat, die Messung der Ein- oder Auskoppeleffizienz während oder nach der Beschichtung mit der wellenleitenden Schicht. Dies erlaubt auch in einfacher Weise eine Überwachung der Verfahrensführung während der Beschichtung und eine Anpassung an sich während der Beschichtung ändernde Verhältnisse. Beispielsweise können Abnutzungerscheinungen des Prägeshims für die Rollprägung, die zu einer veränderten Strukturtiefe des Gitters führen, frühzeitig erkannt und bis zu einem gewissen Grad ohne Unterbrechung des Verfahrens durch Änderung der Dicke der Zwischenschicht ausgeglichen werden.

Je nach Substratmaterial kann es von Vorteil sein, dieses durch eine Schutzschicht gegen radikalischen Angriff aus dem Plasma der Ausgangs stoffe für die wellenleitende Schicht, z. B. Cl-Atome, zu schützen. Dazu reicht eine Schichtdicke von wenigen nm aus.

Nachfolgend wird die Erfindung anhand der Ausführungsbeispiele näher erläutert:

Die Beschichtungen wurden in einer Mikrowellen-PICVD-Anlage durchgeführt, wie sie in Otto J. et al Proceedings SPIE Vol. 1323/1990/39 beschrieben ist. Es handelt sich hierbei um einen Parallelplattenreaktor mit Gasdusche. Die Reaktionsgase wurden durch die Gasdusche in den Reaktionsraum geleitet. Das Substrat lag auf einer für Mikrowellen (2,45 GHz) transparenten dielektrischen Grundplatte. Die Prozeßabgase wurden radial abgepumpt.

I. Herstellung eines Monomodewellenleiters aus TiO₂ auf einem Polycarbonat-Substrat, dessen Oberfläche durch Prägen in Teilbereichen strukturiert bzw. geglättet wurde. Als Struktur wurde ein Gitter mit einem Linienabstand von 364 nm und einer Modulationstiefe von 10 nm eingeprägt.

### Prozeßparameter:

| a) Plasmavorbehandlung | |
|---|---|
| Gas | O₂ u/o N₂ u/o Ar |
| Dauer | 5-300 s |
| Druck | 0,8 mbar |
| Massenfluß | 100 ml/min |
| Impulsdauer | 1 ms |
| Impulspause | 90 ms |

| b) Beschichtung | |
|---|---|
| Druck | 0,8 mbar |
| Massenfluß TiCl₄ | 4 ml/min |
| Massenfluß O₂ | 100ml/min |
| Impulsdauer | 1 ms |
| Impulspause | 90 ms |
| | |
| Beschichtungsrate | 40 nm/min |
| Schichtdicke | 140 nm |
| Substrat | Polycarbonat, 1,5 mm dick, 100 mm Durchmesser |
| | |
| Substrattemperatur | 60°C |

Die Beschichtung erfolgte einmal mit und einmal ohne Aufbringen der Schutzschicht bzw. Verwendung eines Haftvermittlungsverfahrens nach dem Stand der Technik. In beiden Fällen lagen die Verluste für TE0-Wellen bei 2,5 dB/cm.

II. Herstellung eines Monomodewellenleiters aus TiO₂ auf einer mit einem ca. 1 µm dicken thermoplastischen Polyimidfilm (Matrimid 5218, Ciba-Geigy, Basel, Schweiz) beschichteten Glasplatte (AF45, d = 0,55 mm, DESAG, Grünenplan, BRD). Die Substrattemperatur während der Beschichtung betrug 90°C.

### Prozeßparameter:

| a) Plasmavorbehandlung | |
|---|---|
| Gas | O₂ u/o N₂ u/o Ar |
| Dauer | 5 - 300 s |
| Druck | 0,8 mbar |
| Massenfluß | 100 ml/min |
| Impulsdauer | 1 ms |
| Impulspause | 90 ms |

| b) Beschichtung 1: Schutzschicht aus SiO₂ (Schichtdicke: 13 nm) | |
|---|---|
| Druck | 0,8 mbar |
| Massenfluß HMDS: | 10 ml/min |
| Massenfluß O₂ | 90 ml/min |
| Impulsdauer | 0,8 ms |
| Impulspause | 90 ms |
| Beschichtungsrate | 150 nm/min |

| c) Beschichtung 2: Wellenleiter aus TiO₂ (Schichtdicke 140 nm): | |
|---|---|
| Druck | 0,8 mbar |
| Massenfluß TiCl₄: | 5 ml/min |
| Massenfluß O₂ | 95 ml/min |
| Impulsdauer | 0,8 ms |
| Impulspause | 90 ms |
| Beschichtungsrate | 47 nm/min |
| | |
| Verluste für TE0-Welle | 2,5 dB/cm |

III. Herstellung eines Monomodewellenleiters aus TiO₂ auf einer mit einem UV-härtbaren ORMOCER beschichteten Platte aus Glas (AF45, d = 0,55 mm, DESAG):

### Prozeßparameter:

| a) Plasmavorbehandlung | |
|---|---|
| Gas | O₂ u/o N₂ u/o Ar |
| Dauer | 5-300 s |
| Druck | 0,8 mbar |
| Massenfluß | 100 ml/min |
| Impulsdauer | 1 ms |
| Impulspause | 90 ms |

| b) Beschichtung | |
|---|---|
| Druck | 0,8 mbar |
| Massenfluß TiCl₄ | 4 ml/min |
| Massenfluß O₂ | 100 ml/min |
| Impulsdauer | 1 ms |
| Impulspause | 90 ms |
| Beschichtungsrate | 40 nm/min |
| | |
| Schichtdicke | 140 nm |
| Substrat | 2 µm dick ORMOCER-Schicht auf Glas |
| Substrattemperatur | 120°C |
| | |
| Verluste für TE0-Welle | 5 dB/cm. |

IV. Herstellung eines Monomodewellenleiters aus TiO₂ auf einem strukturierten Polycarbonat-Substrat wie Beispiel I mit einer 50 nm dicken Zwischenschicht aus SiO₂.

### Prozeßparameter Zwischenschicht:

| | |
|---|---|
| Druck | 0,8 bar |
| Massenfluß HMDS | 10 ml/min |
| Massenfluß O₂ | 90 ml/min |
| Impulsdauer | 0.8 ms |
| Impulspause | 90 ms |
| Beschichtungsrate | 150 nm/min |

(Plasmavorbehandlung, Aufbringen der wellenleitenden Schicht, Gitterstruktur analog zu Beispiel I).

Durch das zusätzliche Aufbringen der Zwischenschicht erhöhte sich die Laufstrecke des geführten TM0-Modes in dem strukturierten Bereich von 0.5 mm (ohne Zwischenschicht) auf 5 mm.

Alle in obigen Beispielen durchgeführten Beschichtungen sind rißfrei, haftfest (nach MIL-M-13508-C) und überstehen eine mehrtägige Lagerung bei 45°C und 100% rel. Feuchte, sowie in Wasser bei 25°C. Beschichtete Polycarbonatfolien überstehen ebenfalls 30 Temperaturzyklen zwischen Raumtemperatur und 96°C unbeschadet, wobei die beschichtete Seite kontinuierlich mit destilliertem Wasser in Kontakt ist.

Beispielhafte Ausführungsformen der Erfindung werden nachfolgend anhand der Figuren näher erläutert.

Es zeigen:
- Figur 1: einen Schnitt durch einen planaren optischen Wellenleiter
- Figur 2: einen Schnitt durch einen planaren optischen Wellenleiter mit einer Polyimide- oder ORMOCER-Schicht auf einer Trägerplatte,
- Figur 3: einen Schnitt durch einen planaren optischen Wellenleiter mit einer Zwischenschicht,
- Figur 4: einen Schnitt durch einen planaren Wellenleiter mit einer Deckschicht, und
- Figur 5: einen Schnitt durch einen planaren optischen Wellenleiter gemäß einer weiteren Ausführungsform der Erfindung.

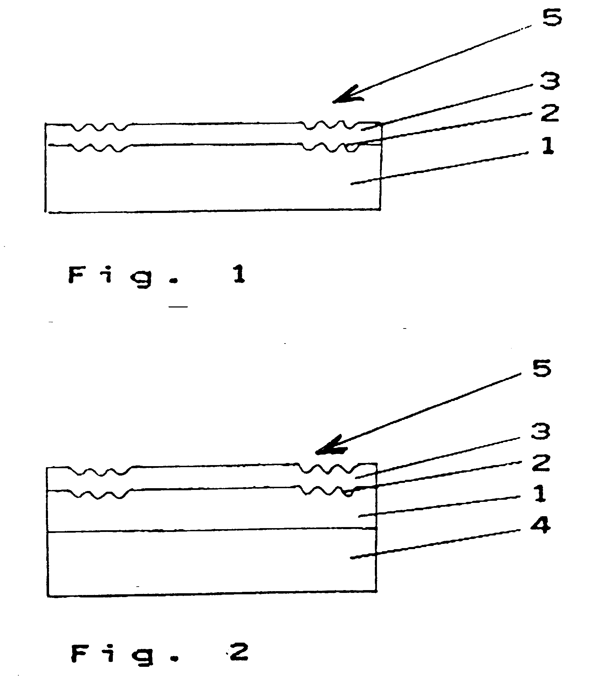

In Figur 1 ist ein Schnitt durch einen planaren optischen Wellenleiter 5 dargestellt, der ein Kunststoffsubstrat 1 aufweist. Auf der Substratoberfläche sind vor dem Aufbringen der wellenleitenden Schicht 3 an zwei beabstandeten Stellen Gitter 2 eingeprägt worden.

In Figur 2 ist eine weitere Ausführungsform des planaren optischen Wellenleiters 5 dargestellt. Auf einer zusätzlichen Trägerplatte 4 ist als Substrat eine ORMOCER-Schicht 1 aufgebracht, in die ebenfalls zwei Gitter 2 eingeprägt sind. Auf der ORMOCER-Schicht 1 ist die wellenleitende Schicht 3 aufgebracht.

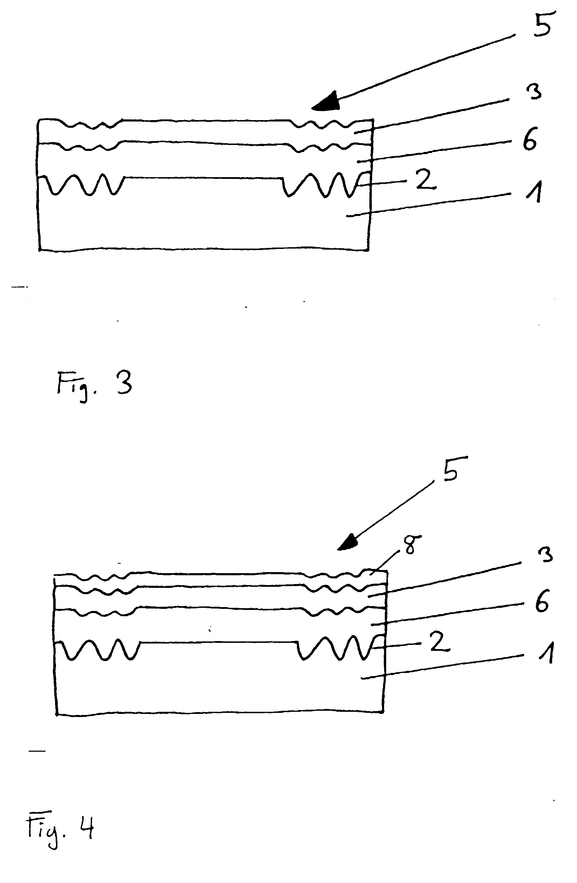

In Figur 3 ist eine Ausführungsform mit einer Zwischenschicht 6 dargestellt. Man erkennt, daß die Zwischenschicht zu einer Glättung des optischen Beugungsgitters und damit zu einer Verminderung der Strukturtiefe führt.

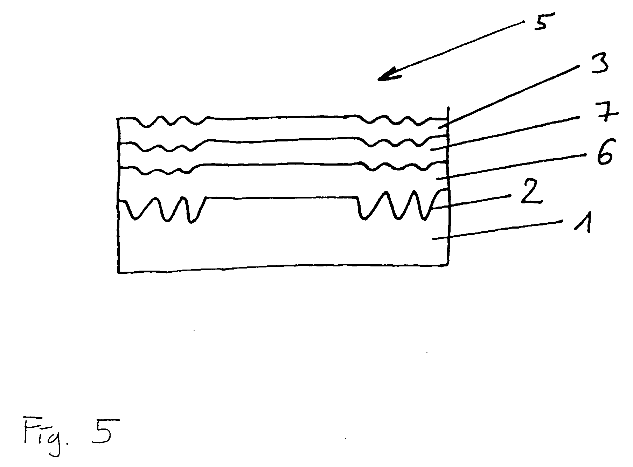

In Figur 4 ist der planare optische Wellenleiter 5 auf der wellenleitenden Schicht 3 zusätzlich mit einer Deckschicht 8 belegt.

In Figur 5 erkennt man, daß zwischen der Zwischenschicht 6, die aus einem organischen Material besteht, und der anorganischen wellenleitenden Schicht 3 eine Schutz- und Haftvermittlungsschicht 7 angeordnet ist.

## Patentansprüche

1. Verfahren zur Herstellung optischer Wellenleiter,
bei welchem auf eine im wesentlichen planare Oberfläche eines Substrats eine wellen leitende anorganische Schicht aufgebracht wird,
**dadurch gekennzeichnet,**
daß als Substat ein Kunststoffsubstrat oder ein Kunststoffsubstrat mit einem Metalloxidanteil verwendet wird, wobei das Verhältnis der Anzahl der Kohlenwasserstoffgruppen zur Anzahl der Metallatomen des Oxids > 0,1 ist,
daß das Kunststoffsubstrat auf eine Temperatur T < T_{g}, wobei T_{g} die Glastemperatur des Kunststoffes ist, oder im Fall eines Kunststoffsubstrats mit einem Metalloxidanteil auf eine Temperatur < 300° C aufgeheizt wird,
und daß auf das Substrat bei der erhöhten Temperatur mittels eines PCVD-Verfahrens eine anorganische wellenleitende Schicht aufgebracht wird.

2. Verfahren nach Anspruch 1,
**dadurch gekennzeichnet,**
daß vor dem Aufbringen der wellenleitenden Schicht das Substrat mit wenigstens einem optischen Beugungsgitter versehen wird.

3. Verfahren nach Anspruch 2,
**dadurch gekennzeichnet,**
daß das optische Beugungsgitter mittels eines Abformverfahrens in die Substratoberfläche eingeprägt wird.

4. Verfahren nach Anspruch 3,
**dadurch gekennzeichnet,**
daß als Substrat ein thermoplatisches Material verwendet wird und das optische Beugungsgitter durch Heißprägen erzeugt wird.

5. Verfahren nach Anspruch 4,
**dadurch gekennzeichnet,**
daß als Substrat eine Kunststoffolie verwendet wird und das optische Beugungsgitter auf der Oberfläche der Kunststoffolie mittels eines kontinuierlichen Rollprägeverfahrens erzeugt wird.

6. Verfahren nach Anspruch 2,
**dadurch gekennzeichnet,**
daß das optische Beugungsgitter durch einen photochemischen Prozeß erzeugt wird.

7. Verfahren nach wenigstens einem der Ansprüche 1 bis 6,
**dadurch gekennzeichnet,**
daß zur Glättung der Substratoberfläche und/oder zur Einstellung des Beugungswirkungsgrades des optischen Beugungsgitters vor dem Aufbringen der wellenleitenden Schicht wenigstens eine Zwischenschicht auf die Substratoberfläche aufgebracht wird.

8. Verfahren nach Anspruch 7,
**dadurch gekennzeichnet,**
daß die Zwischenschicht mittels eines Tauch- oder Schleuderverfahrens aufgebracht wird.

9. Verfahren nach Anspruch 7,
**dadurch gekennzeichnet,**
daß die Zwischenschicht mittels eines PCVD-, insbesondere PICVD-Verfahrens aufgebracht wird.

10. Verfahren nach wenigstens einem der Ansprüche 7 bis 9,
**dadurch gekennzeichnet,**
daß zur Einstellung der Dicke der Zwischenschicht die Beugungseffizienz und/oder Ein- oder Auskoppeleffizienz der Gitterstruktur vor oder nach dem Beschichten gemessen wird.

11. Verfahren nach wenigstens einem der Ansprüche 1 bis 10,
**dadurch gekennzeichnet,**
daß zwischen chemisch inkompatiblen Schichten Haftvermittlungsschichten angeordnet werden.

12. Verfahren nach wenigstens einem der Ansprüche 1 bis 11,
**dadurch gekennzeichnet,**
daß vor dem Aufbringen der anorganischen wellen leitenden Schicht eine Schutzschicht auf die organische Unterlage aufgebracht wird, welche die organische Unterlage gegen Angriff von energetischen Partikeln aus dem Plasma der Ausgangsstoffe für die wellenleitende Schicht schützt.

13. Verfahren nach wenigstens einem der Ansprüche 1 bis 12,
**dadurch gekennzeichnet,**
daß das Plasma mittels Mikrowellen angeregt wird.

14. Verfahren nach wenigstens einem der Ansprüche 1 bis 13,
**dadurch gekennzeichnet,**
daß die anorganische wellenleitende Schicht mittels eines PICVD-Verfahrens erzeugt wird.

15. Verfahren nach wenigstens einem der Ansprüche 1 bis 14,
**dadurch gekennzeichnet,**
daß das Substrat vor dem Aufbringen der wellen leitenden Schicht auf eine Temperatur von > 60°C aufgeheizt wird.

16. Verfahren nach wenigstens einem der Ansprüche 1 bis 15,
**dadurch gekennzeichnet,**
daß das Mikro-Reliefprofil zur Herstellung der streifenförmigen Mikrostruktur eines Streifenwellenleiters mittels einer plastischen oder thermoplastischen Formung oder eines photochemischen Prozesses erzeugt wird.

17. Verfahren nach wenigstens einem der Ansprüche 1 bis 15,
**dadurch gekennzeichnet,**
daß die Brechzahlmodulation zur Erzeugung der streifenförmigen Mikrostruktur eines Streifenwellenleiters mittels eines photochemischen Prozesses erzielt wird.

## Claims

1. Method for producing optical waveguides, which involves the application of a wave-guiding inorganic layer to an essentially planar surface of a substrate,
**characterized**
in that the substrate used is a plastic substrate or a plastic substrate containing a proportion of metal oxide, the ratio of the number of the hydrocarbon groups to the number of the metal atoms of the oxide being greater than 0.1,
in that the plastic substrate is heated to a temperature T < T_{g}, T_{g} being the glass transition temperature of the plastic, or in the case of a plastic substrate containing a proportion of metal oxide is heated to a temperature < 300°C,
and in that an inorganic wave-guiding layer is applied to the substrate at the elevated temperature by means of a PCVD process.

2. Method according to Claim 1,
characterized in that
the application of the wave-guiding layer is preceeded by the substrate being provided with at least one optical diffraction grating.

3. Method according to Claim 2,
characterized in that
the optical diffraction grating is debossed into the substrate surface by means of a moulding method.

4. Method according to Claim 3,
characterized in that
the substrate used is a thermoplastic material and the optical diffraction grating is produced by hot stamping.

5. Method according to Claim 4,
characterized in that
the substrate used is a plastic sheet and the optical diffraction grating is produced on the surface of the plastic sheet by means of a continuous roll stamping process.

6. Method according to Claim 2,
characterized in that
the optical diffraction grating is produced via a photochemical process.

7. Method according to at least one of Claims 1 to 6,
characterized in that,
to smooth the substrate surface and/or to adjust the diffraction efficiency of the optical diffraction grating, the application of the wave-guiding layer is preceded by the application of at least one interlayer to the substrate surface.

8. Method according to Claim 7,
characterized in that
the interlayer is applied by means of a dipping or spin-on process.

9. Method according to Claim 7,
characterized in that
the interlayer is applied by means of a PCVD, in particular a PICVD process.

10. Method according to at least one of Claims 7 to 9,
characterized in that,
to adjust the thickness of the interlayer, the diffraction efficiency and/or injection efficiency or extraction efficiency of the grating pattern is measured before or after coating.

11. Method according to at least one of Claims 1 to 10,
characterized in that
adhesion promoter layers are disposed between chemically incompatible layers.

12. Method according to at least one of Claims 1 to 11,
characterized in that the application of the inorganic wave-guiding layer is preceded by the application of a protective layer to the organic base, which protects the organic base against attack by energetic particles from the plasma of the starting materials for the wave-guiding layer.

13. Method according to at least one of Claims 1 to 12,
characterized in that
the plasma is excited by means of microwaves.

14. Method according to at least one of Claims 1 to 13, characterized in that
the inorganic wave-guiding layer is produced by means of a PICVD process.

15. Method according to at least one of Claims 1 to 14,
characterized in that
the substrate, prior to the application of the wave-guiding layer, is heated to a temperature of > 60°C.

16. Method according to at least one of Claims 1 to 15, characterized in that
the microrelief profile, to produce the striated micropattern of a strip waveguide, is produced by means of plastic or thermoplastic moulding or by means of a photochemical process.

17. Method according to at least one of Claims 1 to 15,
characterized in that
the modulation of the refractive index to produce the striated micropattern of a strip waveguide is achieved by means of a photochemical process.

## Revendications

1. Procédé de fabrication de guides d'ondes optiques, au cours duquel une couche guide d'ondes inorganique est appliquée sur une surface essentiellement plane d'un substrat, caractérisé en ce qu'on utilise comme substrat un substrat en matière plastique ou un substrat en matière plastique avec une fraction d'oxyde métallique, le rapport du nombre de groupes hydrocarbonés au nombre d'atomes métalliques de l'oxyde étant > 0,1, on chauffe le substrat en matière plastique à une température T < T_{g}, où T_{g} est la température de transition vitreuse de la matière plastique, ou, dans le cas d'un substrat en matière plastique avec une fraction d'oxyde métallique, on le chauffe à une température < 300°C, et on applique une couche guide d'ondes inorganique par un procédé PCVD à la température élevée sur le substrat.

2. Procédé suivant la revendication 1, caractérisé en ce que, avant d'appliquer la couche guide d'ondes, on munit le substrat d'au moins un réseau de diffraction optique.

3. Procédé suivant la revendication 2, caractérisé en ce qu'on empreint le réseau de diffraction optique dans la surface de substrat au moyen d'un procédé de surmoulage.

4. Procédé suivant la revendication 3, caractérisé en ce qu'on utilise comme substrat un matériau thermoplastique et en ce qu'on réalise le réseau de diffraction optique par gaufrage à chaud.

5. Procédé suivant la revendication 4, caractérisé en ce qu'on utilise comme substrat un film en matière plastique et en ce qu'on réalise le réseau de diffraction optique sur la surface du film en matière plastique au moyen d'un procédé continu d'estampage au rouleau.

6. Procédé suivant la revendication 2, caractérisé en ce qu'on réalise le réseau de diffraction optique par un procédé photochimique.

7. Procédé suivant l'une au moins des revendications 1 à 6, caractérisé en ce que, pour lisser la surface de substrat et/ou pour ajuster le rendement de diffraction du réseau de diffraction optique, on applique au moins une couche intermédiaire sur la surface de substrat avant d'appliquer la couche guide d'ondes.

8. Procédé suivant la revendication 7, caractérisé en ce qu'on applique la couche intermédiaire au moyen d'un procédé de trempage ou de centrifugation.

9. Procédé suivant la revendication 7, caractérisé en ce qu'on applique la couche intermédiaire au moyen d'un procédé PCVD, en particulier PICVD.

10. Procédé suivant l'une au moins des revendications 7 à 9, caractérisé en ce que, pour l'ajustement de l'épaisseur de la couche intermédiaire, on mesure l'efficacité de diffraction et/ou l'efficacité de couplage ou de découplage de la structure de réseau avant ou après l'application de la couche.

11. Procédé suivant l'une au moins des revendications 1 à 10, caractérisé en ce que des couches adhésives sont disposées entre des couches chimiquement incompatibles.

12. Procédé suivant l'une au moins des revendications 1 à 11, caractérisé en ce que, avant d'appliquer la couche guide d'ondes inorganique, on applique une couche de protection sur le support organique, laquelle protège le support organique contre l'attaque de particules énergétiques du plasma des substances de départ pour la couche guide d'ondes.

13. Procédé suivant l'une au moins des revendications 1 à 12, caractérisé en ce qu'on excite le plasma au moyen de micro-ondes.

14. Procédé suivant l'une au moins des revendications 1 à 13, caractérisé en ce qu'on réalise la couche guide d'ondes inorganique au moyen d'un procédé PICVD.

15. Procédé suivant l'une au moins des revendications 1 à 14, caractérisé en ce qu'on chauffe le substrat à une température de > 60°C avant d'appliquer la couche guide d'ondes.

16. Procédé suivant l'une au moins des revendications 1 à 15, caractérisé en ce que le profil de relief microscopique pour la fabrication de la microstructure en forme de ruban d'un guide d'ondes à ruban est obtenu par formage plastique ou thermoplastique ou au moyen d'un procédé photochimique.

17. Procédé suivant l'une au moins des revendications 1 à 15, caractérisé en ce que la modulation d'indice de réfraction pour la fabrication de la microstructure en forme de ruban d'un guide d'ondes à ruban est obtenue au moyen d'un procédé photochimique.
